Europäisches Patentamt

European Patent Office

Office européen des brevets

(11) Veröffentlichungsnummer: **0 503 353 A1**

## EUROPÄISCHE PATENTANMELDUNG

(21) Anmeldenummer: **92103125.8**

(22) Anmeldetag: **25.02.92**

(51) Int. Cl.5: **F16K 17/04**

(30) Priorität: **11.03.91 DE 9102891 U**

(43) Veröffentlichungstag der Anmeldung:
**16.09.92 Patentblatt 92/38**

(84) Benannte Vertragsstaaten:
**DE FR GB IT SE**

(71) Anmelder: **MESSER GRIESHEIM GMBH**
**Hanauer Landstrasse 330**
**W-6000 Frankfurt/Main 1(DE)**

(72) Erfinder: **Elsner, Peter**
**Donnersbergstrasse 52**
**W-6000 Frankfurt/Main 71(DE)**
Erfinder: **Linz, Dieter**
**An der Trinkhalle 11**
**W-6232 Bad Soden(DE)**

(54) **Abblaseventil.**

(57) Die Erfindung betrifft ein Abblaseventil für Gase, bestehend aus einem Gehäusekörper, einem Schließkörper mit Ventilspindel und Feder.

Um ein Abblaseventil zu schaffen, das sich automatisch montieren läßt und die gewünschten Druckwerte ohne Einstellung erreicht, weist der Gehäusekörper (8) einen zylindrischen Innenraum (9) auf, der an einer Seite mit einer eine Öffnung (10) aufweisenden Wand verschlossen ist, wobei in dem Innenraum (9) der Schließkörper (12) mit der Ventilspindel (5) und der Feder (4) angeordnet ist und das zur Wand (11) weisende Ende der Ventilspindel (5) als geschlitztes elastisches Verbindungsteil (13) ausgebildet und durch die Öffnung (10) der Wand (11) führbar ist, und das Verbindungsteil (13) an seinem äußeren Umfang mindestens ein Sperrelement (6) aufweist, das seitlich von der Ventilspindel (5) absteht.

Fig. 2

Die Erfindung betrifft ein Abblaseventil für Gase, bestehend aus einem Gehäusekörper, einem Schließkörper mit Ventilspindel und einer Feder.

Abblaseventile werden zur Steigerung der Sicherheit von Gasleitungen oder Gasarmaturen eingesetzt. Bei dem Einsatz in einem Druckregler muß das Abblaseventil bis zu einem vorgegebenen Druck dicht bleiben. In einem bestimmten Bereich muß es öffnen, um bei einem Höchstdruck seine volle Durchflußmenge abzublasen. Nach dem Ansprechen und Abblasen muß es bei einem ganz bestimmten Druck wieder dicht sein.

Um diese Druckstufen zu erreichen, werden Abblaseventile in bekannter Weise eingestellt. Dies erfolgt beispielsweise durch Einstellen der Federkraft über ein Stellelement.

Der Erfindung liegt die Aufgabe zugrunde, ein Abblaseventil zu schaffen, das sich automatisch montieren läßt und die gewünschten Druckwerte ohne Einstellung erreicht.

Diese Aufgabe wird erfindungsgemäß durch die kennzeichnenden Merkmale des Anspruches 1 gelöst.

Die automatische Montage des Abblaseventiles erfolgt vorteilhaft dadurch, daß auf die Ventilspindel eine Feder, vorzugsweise automatisch aufschiebbar ist, die an dem gasdurchlässigen Führungskörper aufliegt. Danach wird der Schließkörper mit der Ventilspindel und der darauf angeordneten Feder in den zylindrischen Innenraum des Gehäusekörpers geschoben. Das dem Schließkörper entgegengesetzte Ende der Ventilspindel weist ein geschlitztes elastisches Verbindungsteil auf, das durch Krafteinwirkung zusammengedrückt werden kann. Dieses Zusammendrücken wird automatisch beim Einschieben des Schließkörpers mit Ventilspindel und Feder durch eine am Umfang des Endes vorgesehene konische Fläche beim Durchschieben des Endes der Ventilspindel durch die Öffnung der den zylindrischen Raum des Gehäusekörpers verschließenden Wand erreicht. Hierdurch wird der Umfang des Verbindungsteiles verkleinert. Entfällt diese Krafteinwirkung, nimmt das Verbindungsteil automatisch seine Ausgangslage wieder ein.

Dadurch, daß die am Umfang vorgesehene konische Fläche als Sperrelement, vorteilhaft als Sperrkonus, ausgebildet ist, die sich von dem zur Seite des Schließkörpers weisenden Ende in Richtung des Verbindungsteiles verjüngt und im Bereich ihres größeren Durchmessers von der Ventilspindel absteht, ist der Schließkörper mit der Ventilspindel und der darauf angeordneten Feder nach dem Durchschieben des Verbindungsteiles durch die Öffnung befestigt. Durch das seitlich abstehende Sperrelement wird ein Herausrutschen aus der Öffnung verhindert. Vorteilhaft weist der gasdurchlässige Führungskörper am Umfang Anlageflächen auf, mit denen er an der zylindrischen Wand des Innenraumes anliegt und den Schließkörper mit der Ventilspindel in dem Innenraum zentriert.

Durch eine vorgegebene Abstimmung der Schließfederkraft über die Parameter, Ventilsitzdurchmesser, Schließkörperdurchmesser, Abstand a sowie Federabmessungen kann auf eine Einstellung der Federkraft verzichtet werden.

Vorteilhaft ist der Gehäusekörper an seinem Außenumfang ebenfalls zylindrisch ausgebildet und mit einem Gewinde versehen. Mittels dieses Gewindes kann das Abblaseventil beispielsweise in die Bohrung eines Druckreglers eingeschraubt werden.

Der dem Abblaseventil zugeordnete Ventilsitz ist vorteilhaft als Scheibe mit einer Öffnung ausgebildet. Diese Scheibe mit Öffnung stützt sich an der Stirnseite des Gehäusekörpers ab und kann entweder mittels eines Gewindes mit dem Gehäusekörper verschraubt werden oder aber unabhängig von diesem in die entsprechende Bohrung, beispielsweise eines Druckreglers, eingelegt oder eingeschraubt werden, in die anschließend der Gehäusekörper des vorstehend beschriebenen Abblaseventiles befestigt wird.

Ein Ausführungsbeispiel der Erfindung ist in der Zeichnung dargestellt und wird im folgenden näher beschrieben.

Es zeigen

Fig. 1 ein Abblaseventil nach der Erfindung

Fig. 2 ein Abblaseventil mit zugeordnetem Ventilsitz nach der Montage.

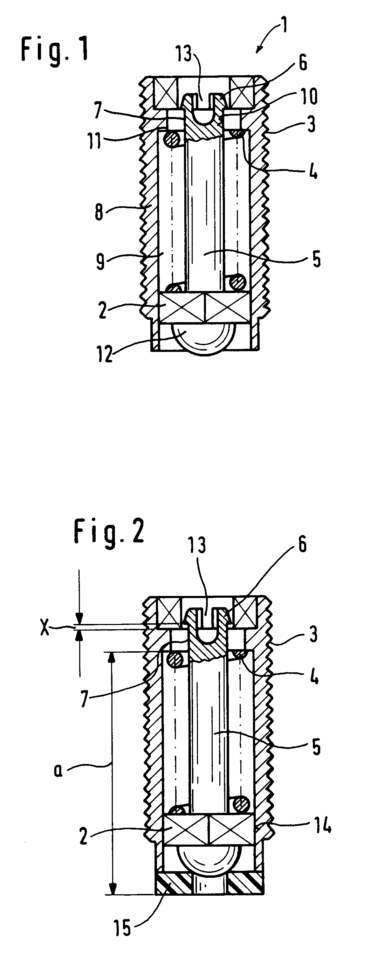

In der Fig. 1 ist ein Abblaseventil in seiner Gesamtheit mit 1 bezeichnet. Das Abblaseventil 1 besteht im wesentlichen aus einem Gehäusekörper 8 mit zylindrischem Innenraum 9, in welchem ein Schließkörper 12 mit Ventilspindel 5 und Führungskörper 2 angeordnet ist. Auf dem gasdurchlässigen Führungskörper 2 liegt eine Feder 4 auf, die sich mit ihrem anderen Ende an einer den zylindrischen Innenraum 9 verschließenden Wand 11 abstützt. In der Wand 11 ist eine Öffnung 10. Der Schließkörper 12 ist vorzugsweise kugelförmig ausgebildet. Die Ventilspindel 5, die einstückig mit dem Führungskörper 2 und dem Schließkörper 12 ausgebildet ist, besteht im wesentlichen aus einem zylindrischen Schaft, an dessen zur Wand 11 gerichtetem Ende ein Verbindungsteil 13 vorgesehen ist. Das am Ende der Ventilspindel 5 ausgebildete Verbindungsteil 13 weist mindestens einen Schlitz auf, der so bemessen ist, daß das Verbindungsteil unter Krafteinwirkung zusammengedrückt werden kann und dadurch eine Durchmesserverkleinerung erfährt. Am Umfang des Verbindungsteiles 13 ist mindestens ein Sperrelement 6 vorgesehen, das eine konische Fläche aufweist. Die konische Fläche verjüngt sich hin zum Ende des Verbindungsteiles 13, d. h. der größte Durchmesser des als Sperrkonus ausgebildeten Sperrelementes 6, weist in Richtung des Schließkörpers 12.

Der Gehäusekörper 8 ist am Umfang im wesentlichen zylindrisch ausgebildet und mit einem Außengewinde 3 versehen. Durch diese Maßnahme kann das Abblaseventil einfach in eine Bohrung z. B. eines Druckreglers eingeschraubt werden.

Das vorstehend beschriebene Abblaseventil kann vorteilhaft automatisch montiert werden. Hierzu wird die Feder 4 mit ihrem gegenüber dem Sperrelement größeren Innendurchmesser auf die Ventilspindel 5 geschoben, bis sie auf dem Führungskörper 2 aufliegt. Anschließend wird die Baueinheit Schließkörper 12, Führungskörper 2 und Ventilspindel 5 mit Feder 4 in den zylindrischen Innenraum 9 des Gehäusekörpers 8 in Richtung Wand 11 geschoben. Erreicht die Ventilspindel 5 mit ihrem am Ende ausgebildeten Verbindungsteil 13 die Öffnung 10 der Wand, wird das elastische Verbindungsteil 13 unter Krafteinwirkung zusammengedrückt und durch die Öffnung 10 geführt. Vorteilhaft wird eine Führung der Baueinheit 12, 2, 5 und 4 innerhalb des Innenraumes 9 über den Führungskörper 2 erreicht, der mindestens mit Teilen 14 seines Umfanges an der zylindrischen Wand des Innenraumes 9 anliegt.

Nachdem das Verbindungsteil durch die Öffnung 10 geführt ist, nimmt es seine Ausgangsstellung ein. Das Sperrelement 6 weist nun einen größeren Durchmesser als die Öffnung 10 der Wand auf und verhindert somit vorteilhaft ein Herausfallen der Baueinheit 12, 2, 5 und 4.

Dem so von einer Seite montierten Abblaseventil ist ein Ventilsitz 15 zugeordnet, wie er in Fig. 2 dargestellt ist. Der Venilsitz 15 besteht im wesentlichen aus einer Scheibe mit einer Öffnung. Der Ventilsitz kann z. B. in die Bohrung eines Druckreglers eingelegt und anschließend das Abblaseventil 1 wie vorstehend beschrieben eingeschraubt werden. Hierbei sind die Stirnseite des Gehäusekörpers 8, an der der Ventilsitz 15 zur Anlage gebracht wird, der Schließkörper 12 und die Öffnung des Ventilsitzes 15 so zueinander angeordnet, daß die Feder 4 um einen Betrag X zusammengedrückt wird. Entsprechend steht das Verbindungsteil 13 mit dem Sperrelement 6 über der Wand 11.

Es ist selbstverständlich auch möglich, den Ventilsitz 15 mit dem Gehäusekörper des Abblaseventiles 1 lösbar zu verbinden.

**Patentansprüche**

1. Abblaseventil für Gase, bestehend aus einem Gehäusekörper, einem Schließkörper mit Ventilspindel und einer Feder,
dadurch gekennzeichnet,
daß der Gehäusekörper (8) einen zylindrischen Innenraum (9) aufweist, der an einer Seite mit einer eine Öffnung (10) aufweisenden Wand verschlossen ist,
daß in dem Innenraum (9) der Schließkörper (12) mit der Ventilspindel (5) und der Feder (4) angeordnet ist und das zur Wand (11) weisende Ende der Ventilspindel (5) als geschlitztes elastisches Verbindungsteil (13) ausgebildet und durch die Öffnung (10) der Wand (11) führbar ist,
und daß das Verbindungsteil (13) an seinem äußeren Umfang mindestens ein Sperrelement (6) aufweist, das seitlich von der Ventilspindel (5) absteht.

2. Abblaseventil nach Anspruch 1,
dadurch gekennzeichnet,
daß das Sperrelement (6) als Sperrkonus ausgebildet ist.

3. Abblaseventil nach Anspruch 1 oder 2,
dadurch gekennzeichnet,
daß zwischen Schließkörper (12) und Ventilspindel (5) ein gasdurchlässiger Führungskörper (2) vorgesehen ist, der mindestens mit Teilen (14) seines Umfanges an der zylindrischen Wand des Innenraumes (9) anliegt und auf dem die Feder (4) aufliegt.

4. Abblaseventil nach einem der Ansprüche 1 bis 3,
dadurch gekennzeichnet,
daß der Gehäusekörper (8) mit einem Außengewinde (3) versehen ist.

5. Abblaseventil nach einem der Ansprüche 1 bis 4,
dadurch gekennzeichnet,
daß dem Schließkörper (12) ein Ventilsitz (15) zugeordnet ist, der aus einer Scheibe mit einer Öffnung besteht.

Fig. 1

Fig. 2

Europäisches
Patentamt

**EUROPÄISCHER RECHERCHENBERICHT**

Nummer der Anmeldung

| EINSCHLÄGIGE DOKUMENTE | | | EP 92103125.8 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int CI⁵) |
|---|---|---|---|
| A | <u>DE - A - 2 750 413</u> <br> (AGA AB) <br>     * Figurenbeschreibung; <br>       Fig. 1-4 * <br> -- | 1,3,4 | F 16 K 17/04 |
| A | <u>DE - A - 1 806 748</u> <br> (A. TEVES GES. m.b.H.) <br>     * Gesamt * <br> -- | 1,3,5 | |
| A | <u>US - A - 4 172 465</u> <br> (DASHNER) <br>     * Figurenbeschreibung; <br>       Fig. 1,2 * <br> -- | 1 | |
| A | <u>GB - A - 1 402 854</u> <br> (BRYAN DONKIN COMP. LTD.) <br>     * Gesamt * <br> -- | 1 | |
| A | <u>US - A - 3 542 063</u> <br> (ETTER) <br>     * Gesamt * <br> -- | 1,3 | |
| A | <u>US - A - 4 622 993</u> <br> (TAYLOR) <br>     * Figurenbescheibung; <br>       Fig. 1,2 * <br> ---- | 1 | |

RECHERCHIERTE
SACHGEBIETE (Int CI⁵)

F 16 K
G 05 D

Der vorliegende Recherchenbericht wurde für alle Patentansprüche erstellt.

| Recherchenort | Abschlußdatum der Recherche | Prüfer |
|---|---|---|
| WIEN | 19-06-1992 | ROUSSARIAN |